# EUROPÄISCHE PATENTSCHRIFT

(11) **EP 2 846 927 B1**
(45) Veröffentlichungstag und Bekanntmachung des Hinweises auf die Patenterteilung: **04.05.2016**
(21) Anmeldenummer: 13728526.8
(22) Anmeldetag: 25.04.2013
(51) Int. Cl.: A01C 23/04, B05B 11/00, B05B 9/08, A01M 7/00

(54) **TRAGBARES SPRÜHGERÄT**
WEARABLE SPRAYING DEVICE
PULVERISATEUR PORTABLE

(30) Priorität: 07.05.2012 CH 630122012
(43) Veröffentlichungstag der Anmeldung: 18.03.2015
(73) Patentinhaber: Birchmeier Sprühtechnik AG, 5608 Stetten (CH)
(72) Erfinder: ZWAHLEN, Jürg, 9495 Triesen (LI); CARROZZA, Claudio, CH-5608 Stetten (CH); ZAUGG, Michael, CH-4663 Aarburg (CH)
(74) Vertreter: Tompkin, Christine
(86) Internationale Anmeldenummer: PCT/IB2013/053268
(87) Internationale Veröffentlichungsnummer: WO 2013/168040

(56) Entgegenhaltungen:
- WO-A1-97/02899
- WO-A1-2012/045402
- US-A1- 2006 261 181
- US-B1- 6 412 707

## Beschreibung

### Technisches Gebiet

Die Erfindung betrifft ein tragbares Sprühgerät zum Ausbringen einer Flüssigkeit unter Verwendung einer von Hand bedienbaren Pumpe.

### Stand der Technik

Tragbare Sprühgeräte, insbesondere auf dem Rücken tragbare Geräte, sind seit vielen Jahrzehnten bekannt. Sie ermöglichen das Ausbringen durch Versprühen von Flüssigkeiten wie Wasser, Dünge- und Pflanzenschutzmitteln, Reinigungsmitteln oder anderen Flüssigkeiten und Flüssigkeitsmischungen im Bereich der Garten- und Plantagenpflege sowie in Anwendungen in der Industrie, Hygiene und Haushalt.

Solche Geräte weisen einen Tank als Reservoir der Sprühflüssigkeit auf, einen Druckbehälter sowie einen Schlauch mit Lanze oder Düse zum gezielten Versprühen der Flüssigkeit. Ein gesamtes Gerät kann mittels am Tank befestigten Tragschlaufen beispielsweise auf dem Rücken transportiert werden. Eine Pumpe lässt sich durch manuelle Bewegung eines Hebels betätigen, sodass Flüssigkeit aus dem Tank in die Pumpe gesaugt und von dort unter Druck in den Druckbehälter geleitet wird, wobei die Flüssigkeit auch in den Schlauch gelangt. Eine Handbetätigung eines Ventils am Schlauchende löst das Versprühen der Flüssigkeit über eine Düse oder Lanze zum gewünschten Zeitpunkt aus. Der Druckbehälter ist in bekannten Geräten entweder im Tank selbst oder ausserhalb des Tanks angeordnet.

Ein tragbares Sprühgerät ist beispielweise in US 6,412,707 offenbart. Dort ist ein Druckbehälter mittig innerhalb des Tanks angeordnet, wobei die Pumpe unterhalb des Tanks angebracht ist. Das Gerät besitzt insbesondere am unteren Ende der Pumpe einen Balg, der einen Behälter zwecks Rückhaltung von Leckagen von Flüssigkeit aus dem Pumpenzylinder bildet. Der Kolben der Pumpe wird mittels eines seitlich des Tanks angebrachten Handhebels bewegt, indem durch den Handhebel eine horizontal verlaufende Querstange um ihre Längsachse rotiert wird und der Kolben über einen Winkelhebel und Stange auf und ab bewegt wird.

US 5,938,116 offenbart ein tragbares Sprühgerät mit einem Tank, einer im Tank angeordneten Pumpe und einem Schlauch mit Ventil und Düse. Bei Betätigung der Pumpe mittels eines Handhebels wird Flüssigkeit zunächst in einen Pumpenzylinder gesaugt und sodann in einen elastischen Behälter im Schlauch gedrückt. Die unter Druck stehende Flüssigkeit kann sodann über eine Düse mit Ventil am Ende des elastischen Behälters ausgebracht werden.

### Beschreibung der Erfindung

Es wird ein tragbares Sprühgerät zum Ausbringen von Flüssigkeiten offenbart mit einem Tank, der als Reservoir der Flüssigkeit dient, einer durch einen Handhebel betätigbaren Pumpe, wobei der Handhebel um eine Drehachse bewegbar ist. Das Sprühgerät weist zudem einen Druckbehälter auf zur Aufnahme von Flüssigkeit unter Druck sowie einen Schlauch mit einem Ventil und einer Düse oder Lanze zum Versprühen von unter Druck stehender Flüssigkeit.

Gemäss der Erfindung und dem unabhängigen Anspruch weist der Handhebel des Sprühgeräts einen Hohlraum mit einer Öffnung auf, wobei die Pumpe mit einem Pumpenzylinder, einem Kolben und einer Kolbenstange im Hohlraum des Handhebels angeordnet ist. Der Pumpenzylinder der Pumpe und die Öffnung des Handhebels sind dichtend abschliessbar. Der Druckbehälter wird dabei durch den Hohlraum, den Pumpenzylinder und eine Verschlussvorrichtung über der Öffnung gebildet. Die Kolbenstange ist drehbar über eine Gelenkverbindung mit dem Tank oder einer Ständervorrichtung des Sprühgeräts verbunden.

Das erfindungsgemässe Sprühgerät zeichnet sich insbesondere durch die Integrierung des Druckbehälters sowie der Pumpe im Handhebel selbst aus, indem diese drei Elemente eine kompakte Einheit bilden. Die Kolbenstange bewegt sich beim Betrieb des erfindungsgemässen Sprühgeräts nur indem sie sich um die Achse der Gelenkverbindung dreht. Beim Betrieb der Pumpe mittels des Handhebels bewegt sich hingegen der Druckbehälter mitsamt dem Pumpenzylinder relativ zur Kolbenstange und dem Kolben.

In einer Ausführung ist die dichtende Abschliessung der Öffnung des Hohlraums des Handhebels und der Pumpe gegen aussen durch eine abnehmbare Verschliessvorrichtung realisiert. Dies erlaubt ein Abmontieren der Pumpe lediglich durch die Entfernung der Verschlussvorrichtung ohne Zuhilfenahme von Werkzeugen zwecks Wartung der Pumpe, wie zum Beispiel Reinigung, Entfernung von Ablagerungen oder Austausch von Teilen. In einer Ausführung weist die Verschliessvorrichtung eine Verschlussvorrichtung mit Gewinde oder einen Schnappverschluss auf.

In einer weiteren Ausführung der Erfindung ist ein Anschluss-Stutzen für den Schlauch mit Sprühdüse als Teil des Handhebels ausgebildet. Ein Schlauch kann dadurch direkt am Handhebel befestigt werden. Die Integrierung des Anschluss-Stutzens am Handhebel ermöglicht eine bequemere Benützung, indem der Schlauch nur vom Handhebel an der Seite des Benützers bis zur Sprühlanze verläuft und als solches sich nur vor dem Benützer befindet. Dadurch wird vermieden, dass ein Schlauchteil von der Hinterseite des Geräts nach vorne verläuft und dabei an Gebüsch oder anderem hängen bleiben kann.

In einer weiteren Ausführung ist die Kolbenstange hohl ausgebildet und bildet als solches eine Ansaugleitung für die Flüssigkeit aus dem Tank in den Pumpenzylinder. Vom Tank führt eine Zufuhrleitung zum Ende der hohlen Kolbenstange, das der Gelenkverbindung zugewandt ist. An dem Kolben zugewandten Ende weist die Kolbenstange eine oder mehrere Öffnungen auf, über die die Flüssigkeit in den Pumpenzylinder gelangen kann.

In einer Ausführung der Erfindung weist die Pumpe zur statischen Dichtung gegen aussen einen Balg auf, der mittels der Verschliessvorrichtung an der Öffnung des Hohlraums befestigt ist. Indem der Balg in seiner Form anpassbar ist, wird eine zuverlässige Dichtung während der gesamten Pumpbewegung erreicht. Zudem ist diese Art Dichtung, zum Beispiel im Gegensatz zu einem O-Ring zur Abdichtung einer Kolbenstangendurchführung, weniger anfällig auf Abnützung oder Fremdkörper, die sich aus der Flüssigkeit ablagern könnten.

Die Pumpe weist im Bereich einer Öffnung im Pumpenzylinder zum Hohlraum hin ein Rückschlagventil als Rückstromsperre auf, das sich aufgrund der Druckdifferenz zwischen Druckbehälter und Pumpe öffnet und schliesst. Der Kolben der Pumpe ist hierzu in einer Ausführung mit zwei Lippen ausgebildet, wobei zwischen den Lippen ein frei beweglicher O-Ring angeordnet ist. Die Kolbenlippen zusammen mit dem O-Ring ermöglichen das Ansaugen der Flüssigkeit aus dem Tank in den Pumpenzylinder sowie das Ausbringen der Flüssigkeit unter Druck in den Hohlraum des Handhebels. Zudem gewährleisten sie, dass beim Herauspressen der Flüssigkeit in den Druckbehälter keine Flüssigkeit zurück fliesst.
In einer weiteren Ausführung weist der Kolben als Rückstromsperre stirnseitig eine Klappe, Membran, oder ein Kugelrückschlagventil auf, wobei ein O-Ring in einer Ringnut am Kolben fest angeordnet ist.

In einer Ausführung der Erfindung ist der gesamte Handhebel von der Drehachse abnehmbar und in einer horizontalen Position als auch in einer vertikalen Position, parallel zum Tank fixierbar. Hierfür weist der Hebel beispielsweise einen Schnapphaken auf zwecks Fixierung an der Drehachse, wobei an der Drehachse eine Aufnahmevorrichtung angeordnet ist, in die der Schnapphaken eingreifen kann. Dies ermöglicht Flexibilität in der Betätigung der Pumpe, indem die Benützer des Geräts die Ausgangsposition des Handhebels, d.h. die Position des Beginns der Saugfunktion, frei wählen können. Es erlaubt, die Pumpe einerseits aus der horizontalen Position des Handhebels zu betätigen, während das Gerät auf dem Rücken getragen wird. Anderseits ist auch eine Betätigung von der vertikalen Position ausgehend möglich, während das Gerät beispielsweise aufrecht abgestellt ist. Zudem lässt sich das Gerät mit einer vertikalen Fixierung des Handhebels ordentlich verstauen.

Weitere Merkmale und Vorteile der Erfindung folgen aus den abhängigen Patentansprüchen und der nachfolgenden Beschreibung, in welcher die Erfindung anhand eines in den schematischen Zeichnungen dargestellten Ausführungsbeispiels näher erläutert wird.

### Kurze Beschreibung der Figuren

Fig. 1 zeigt eine Gesamtansicht des erfindungsgemässen, tragbaren Sprühgeräts mit im Handhebel integrierten Druckbehälter und Pumpe,
Fig. 2a zeigt eine Ansicht des Handhebels in einem Längsschnitt in einer horizontalen Position,
Figuren 2b und c zeigen einen Ausschnitt der Ansicht von Figur 2a, insbesondere die Pumpe des Sprühgeräts, wovon

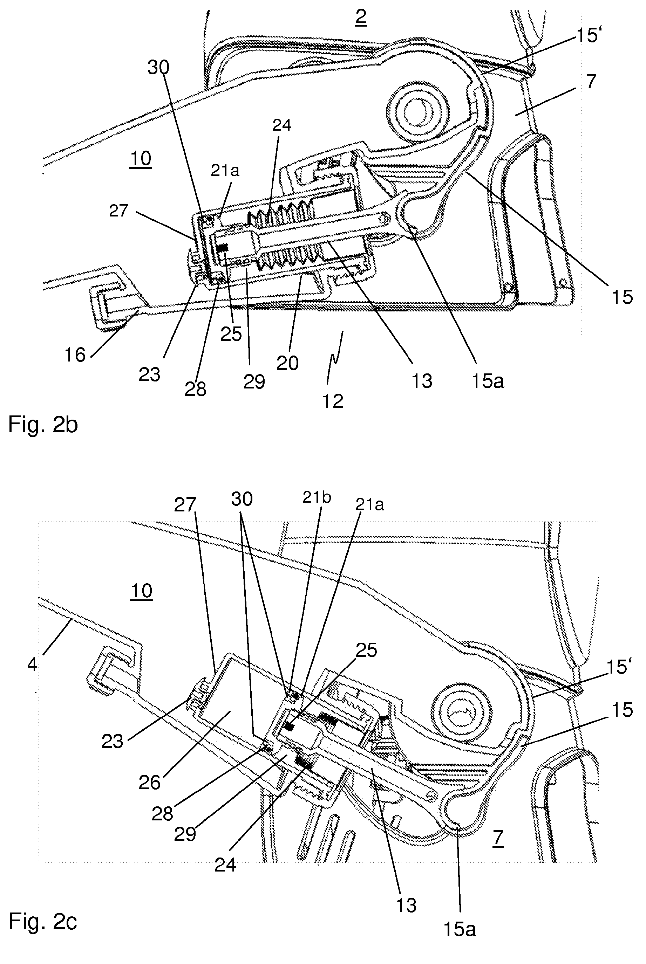

Figur 2b den Handhebel und die Pumpe in einer horizontalen Position zeigt, in der der Kolben sich am Ende des Pumpenzylinders unmittelbar am Rückschlagventil befindet.
Figur 2c zeigt den Handhebel und die Pumpe in einer im Vergleich zu Figur 2b höheren Position, in der der Kolben vom Rückschlagventil beabstandet ist.

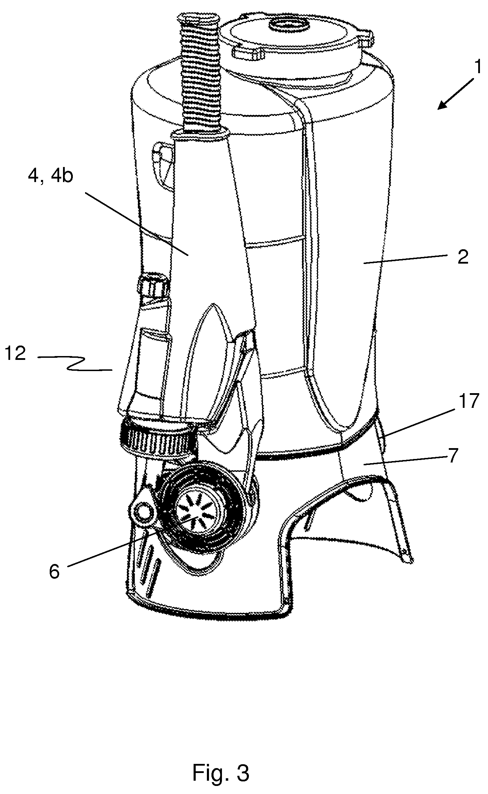

Fig. 3 zeigt eine Ansicht des erfindungsgemässen, tragbaren Sprühgeräts mit dem Handhebel in einer vertikaler Position.

In den Figuren werden für dieselben Elemente jeweils dieselben Bezugszeichen verwendet und erstmalige Erklärungen betreffen alle Figuren, sofern nicht ausdrücklich anders erwähnt.

### Ausführungsform der Erfindung

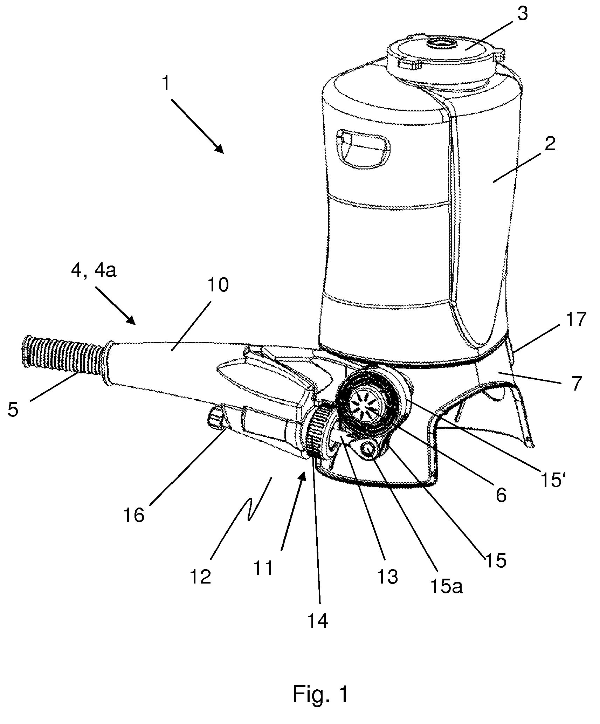

Figur 1 zeigt ein tragbares Sprühgerät 1 gemäss der Erfindung zum Versprühen einer Flüssigkeit. Sie weist einen Tank 2 auf, der als Speichervolumen der Flüssigkeit dient und kann über eine mit einem Verschluss 3 versehenen Öffnung am oberen Ende des Tanks 2 aufgefüllt oder entleert werden. Seitlich des Tanks 2 ist eine länglich geformter Handhebel 4 mit einem Handgriff 5 angeordnet, der über eine Drehachse 6 im unteren Bereich des Tanks 2 drehbar befestigt ist. Eine Ständervorrichtung 7, hohl und leicht gefertigt, erlaubt ein aufrechtes Abstellen des Geräts 1. Das gesamte Gerät kann mittels nicht dargestellten Tragschlaufen auf dem Rücken getragen werden, wobei der Tank 2 eine ergonomische, dem Rücken angepasste Form aufweist.
Der Handhebel 4 des erfindungsgesmässen Sprühgeräts weist einen Hohlkörper 10 und eine der Drehachse 6 des Handhebels zugewandten Öffnung 11 auf. Eine Pumpe 12 ist im Innenraum des Hohlkörpers des Handhebels angeordnet, wobei ein Pumpenzylinder 20 mit Kolben im Innenraum des Hohlkörpers liegt und eine Kolbenstange 13 sich vom Pumpenzylinder 20 über die Öffnung 11 hinaus erstreckt. Die Kolbenstange 13 ist über ein Hebelelement 15 mit der Drehachse 6 des Handhebels 4 verbunden. Die Öffnung 11 ist durch eine Verschlussvorrichtung 14 dichtend verschliessbar, wobei eine Aussparung in der Verschlussvorrichtung eine Bewegung der Kolbenstange 13 durch die Verschlussvorrichtung 14 gewährt. Der Hohlkörper 10 bildet zusammen mit der Verschlussvorrichtung 14 und dem Pumpenzylinder 20 ein Volumen, das als Druckbehälter des Sprühgeräts dient.
Im Handhebel 4 ist ein Anschlussstutzen 16 integriert, der am einen Ende in Verbindung mit dem Hohlkörper 10 ist und an dessen anderen Ende ein nicht dargestellter Schlauch mit Ventil und Düse zum Versprühen der Flüssigkeit angeschlossen werden kann.

Der Handhebel 4 integriert somit den Handhebel, den Druckbehälter, die Aufnahme der Pumpe sowie den Anschlussstutzen für den Schlauch in einem einzigen Element. Als solches kann der gesamte Handhebel aus einem einzigen Teil aus Kunststoff gefertigt werden. Zudem ermöglicht die Integration mehrerer Elemente im Handhebel einen vereinfachten und effizienten Zusammenbau.

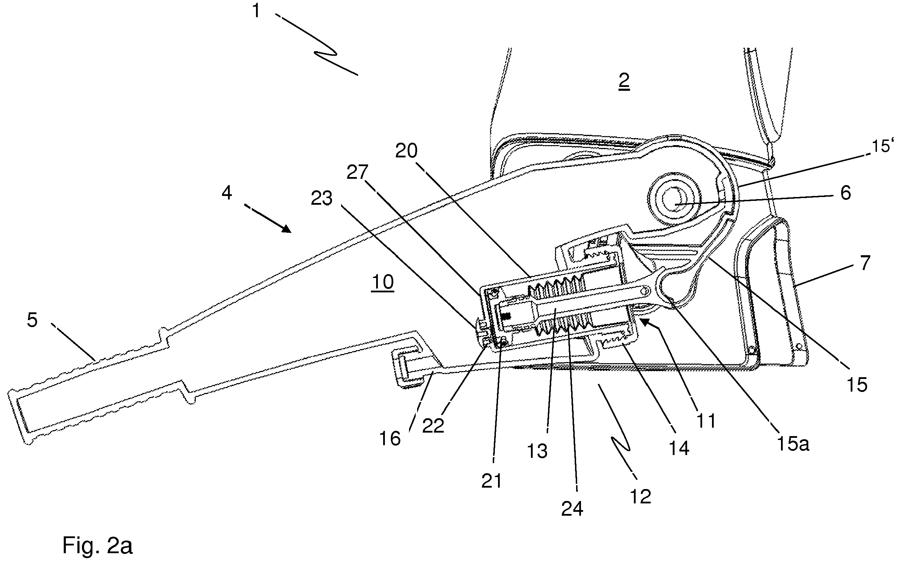

Die Einzelteile der Pumpe 12 sowie deren Funktionsweise werden anhand der Figuren 2a-c) offenbart. Die Pumpe 12 umfasst einen Pumpenzylinder 20 und Kolben 21, der mit einer Kolbenstange 13 verbunden ist. Die Kolbenstange ist über eine Gelenkverbindung 15a mit einem statischen Element 15 drehbar verbunden, wobei das statische Element 15 eine Scheibe 15' umfasst, die an der Ständervorrichtung 7 befestigt ist. Bei Betätigung des Handhebels bewegen sich dieses Element 15 und die Scheibe 15' nicht. Der Zylinder 20 ist in der Öffnung 11 des Handhebels 4 angeordnet und ragt in den Hohlraum 10 des Hebels 4 hinein, welcher den Druckbehälter 10 bildet. Der Zylinder 20 ist an seinem Zylinderende 27 über eine Öffnung 22 mit einem Rückschlagventil, beispielweise einem Kugelrückschlagventil 23 oder einer Membran, mit dem Druckbehälter 10 verbunden. Eine Verschlussvorrichtung 14 schliesst sowohl den Pumpenzylinder 20 als auch die Öffnung 11 und somit den Hohlraum und Druckbehälter 10 des Geräts ab. Die Verschlussvorrichtung 14 weist eine Öffnung auf, durch die die Kolbenstange 13 in den Zylinder 20 geführt ist. Ein Balg 24 dichtet den Innenraum des Zylinders 20 und somit den Hohlraum 10 gegen aussen ab. Die Kolbenstange 13 ist entlang ihrer gesamten Länge hohl ausgebildet und weist an ihrem, der Gelenkverbindung 15a zugewandten Ende eine Öffnung und einen Anschluss auf für eine (nicht dargestellte) Ansaugleitung vom Tank 2. An ihrem im Zylinder 20 befindlichen Ende weist sie eine oder mehrere Auslassöffnungen 25 auf, durch die angesaugte Flüssigkeit in den Zylinder 20 gelangen kann.

Der Handhebel 4 kann beispielsweise ausgehend von einer horizontalen Position, wie in Figur 2a und b gezeigt, um die Drehachse 6 nach oben bewegt werden, wobei der Druckbehälter 10 zusammen mit dem Pumpenzylinder 20 nach oben in eine höhere Position bewegt werden (Figur 2c). Die am Element 15 befestigte Kolbenstange 13 bewegt sich dabei lediglich in Form einer Drehung um die Gelenkverbindung 15a. Dadurch ergibt sich eine Bewegung des Pumpenzylinders 20 relativ zum Kolben 21 in einer Richtung weg von der Gelenkverbindung 15a, während der Kolben 21 die Drehbewegung um die Drehachse der Gelenkverbindung 15a durchführt. Es bildet sich dabei ein Zylinderraum 26 zwischen Zylinderende 27 und Kolben 21, wobei ein Puffer-Raum 29 zwischen Kolben 21 und Balg 24 verkleinert wird (Figur 2c). Im Zylinderraum 26 zwischen Kolben 21 und Zylinderende 27 bildet sich ein Unterdruck, wobei sich das Rückschlagventil 23 schliesst. Bei der allerersten Pumpbewegung fliesst Luft aus dem noch leeren Pufferraum 29 in den Zylinderraum. Befindet sich bereits Flüssigkeit im Pufferraum 29 dringt diese Flüssigkeit aus dem Puffer-Raum 29 in den Zylinderraum 26. Ein frei beweglicher O-Ring 28 befindet sich zwischen einer inneren, der Kolbenstange 13 zugewandten Kolbenlippe 21 a und einer äusseren, dem Zylinderende 27 zugewandten Kolbenlippe 21 b. Der O-Ring 28 wird während der Bewegung des Zylinders 20 weg von der Gelenkverbindung 15a durch eine Hemmwirkung sowie die Druckdifferenz zwischen den Räumen beidseits des Kolbens 21 an die äussere Kolbenlippe 21 b gedrückt, wobei diese gegen die Zylinderwand abdichtet. Die Flüssigkeit vom Pufferraum 29 gelangt an der inneren Kolbenlippe 21 a vorbei und durch eine Anzahl Öffnungen 30 in der äusseren Kolbenlippe 21 b in den Zylinderraum 26.
Um die in den Zylinderraum 26 angesaugte Flüssigkeit von dort in den Druckbehälter 10 zu pressen, wird der Handhebel 4 wieder nach unten gedrückt, wobei der Pumpenzylinder 20 und das Zylinderende 27 zum Kolben 13 hin bewegt werden und der Zylinderraum 26 sich wieder verkleinert. Durch die Bewegung des Pumpenzylinders 20 in Richtung Gelenkverbindung 15a steigt der Druck im Zylinderraum 26, das Rückschlagventil 23 öffnet sich und Flüssigkeit gelangt durch das Rückschlagventil 23 in den Druckbehälter 10. Dabei wird der O-Ring 28 an den inneren Kolbenring 21 a gedrückt und dichtet gegen die innere Kolbenlippe 21 a und die Zylinderwand ab, sodass keine Flüssigkeit vom Zylinderraum 26 zurück in den Puffer-Raum 29 entweicht.
Zugleich wird durch Bildung eines Unterdrucks im Puffer-Raum 29 Flüssigkeit aus dem Tank 2 über die hohle Kolbenstange 21 zu ihrem Ende am Kolben 13 angesaugt, wo sie durch die Öffnungen 25 an diesem Ende der Kolbenstange 13 in den Puffer-Raum 29 gelangt. Die Flüssigkeit im Puffer-Raum 29 gelangt sodann bei der nächsten Aufwärtsbewegung des Hebels 4 und Zylinders 20 in den Raum 26.

Der gesamte Handhebel 4 mit seiner Drehachse ist vom Rest des Geräts abnehmbar und in einer neuen Position wieder fixierbar. Beispielsweise, läuft der Handhebel 4 auf einer Drehachse 6, die in einer Steckachse in die Ständervorrichtung 7 gebracht wird. Die beiden Achsen sind jeweils mit einem Schnapphaken fixiert. Diese Funktion dient einerseits der Fixierung des Hebels in der vertikalen Position 4b, wobei das Gerät beim Verstauen weniger Platz einnimmt. Anderseits ermöglicht sie die Positionierung des Hebels in der vertikalen Position als Ausgangsposition des Betriebs, sodass die Bewegung zum Ansaugen und Pumpen der Flüssigkeit von einer vertikalen Position ausgehend durchgeführt wird. Die Pumpe kann somit auch dann bequem und einfach betätigt werden, wenn das Gerät nicht auf dem Rücken getragen wird.
Der Handhebel 4 kann auch auf der gegenüberliegenden Seite des Geräts betrieben werden.

Die Verschlussvorrichtung 14 zur Abschliessung und Dichtung der Öffnung 11 des Handhebels ist in der gezeigten Ausführungsform mit einem Gewinde 14a versehen, das eine Öffnung und/oder Entfernung der Pumpe zwecks deren Wartung mit minimalem Aufwand ermöglicht. Der Verschluss der Verschlussvorrichtung am Körper des Handhebels kann auch mittels eines Schnappverschlusse realisiert werden.

### Bezugszeichenliste

- 1: tragbares Sprühgerät
- 2: Tank
- 3: Tankverschluss
- 4: Handhebel
- 5: Handgriff
- 6: Drehachse
- 7: Ständervorrichtung
- 8,9: --
- 10: Hohlraum
- 11: Öffnung
- 12: Pumpe
- 13: Pleuel
- 14: Verschlussvorrichtung, dichtender Verschluss
- 15: Hebelelement
- 15a: Gelenkverbindung
- 16: Anschluss-Stutzen
- 17: zweiter Anschluss für Handhebel
- 18, 19: --
- 20: Pumpenzylinder
- 21: Kolben
- 21a: innerer Kolbenlippe, der Kolbenstange 13 zugewandt
- 21b: äusserer Kolbenlippe, dem Zylinderende 27 zugewandt
- 22: Öffnung zum Hohlraum
- 23: Kugelrückschlagventil
- 24: Balg
- 25: Öffnungen
- 26: Zylinderraum
- 27: Zylinderende
- 28: O-Ring
- 29: Zylinderraum, Puffer-Reservoir
- 30: Öffnungen in äusserer Kolbenlippe 21 b

## Patentansprüche

1. Tragbares Sprühgerät (1) zum Ausbringen von Flüssigkeiten aufweisend einen Tank (12), eine Pumpe (12), einen um eine Drehachse (6) bewegbaren Handhebel (4) zur Betätigung der Pumpe (12), einen Druckbehälter (10) zur Aufnahme von Flüssigkeit unter Druck, wobei durch die Betätigung des Handhebels Flüssigkeit aus dem Tank in die Pumpe gesaugt und unter Druck in den Druckbehälter geleitet wird, sowie einen Schlauch mit einem Ventil und einer Düse oder Lanze zum Versprühen von unter Druck stehender Flüssigkeit, **dadurch gekennzeichnet, dass**
der Handhebel (4) des Sprühgeräts (1) einen Hohlraum (10) mit einer Öffnung (11) aufweist, wobei die Pumpe (12) mit einem Pumpenzylinder (20), einem Kolben (21) und einer Kolbenstange (13) im Hohlraum (10) angeordnet ist, und der Pumpenzylinder (20) der Pumpe (12) und die Öffnung (11) des Handhebels (4) dichtend geschlossen sind,
und der Druckbehälter durch den Hohlraum (10) und die dichtend geschlossene Öffnung (11) gebildet ist, und die Kolbenstange (13) über ein Hebelelement (15) mit der Drehachse (6) des Handhebels (4) drehbar verbunden ist.

2. Tragbares Sprühgerät (1) nach Anspruch 1
**dadurch gekennzeichnet, dass**
die Öffnung (11) des Hohlraums (10) und der Pumpenzylinder (20) gegen aussen durch eine abnehmbare Verschliessvorrichtung (14) dichtend geschlossen ist.

3. Tragbares Sprühgerät (1) nach Anspruch 2
**dadurch gekennzeichnet, dass**
die Verschliessvorrichtung durch eine Verschlussvorrichtung (14) mit Gewinde (14a) oder einen Schnappverschluss ausgebildet ist.

4. Tragbares Sprühgerät (1) nach einem der vorangehenden Ansprüche
**dadurch gekennzeichnet, dass**
der Handhebel (4) aus einem Leichtbaumaterial oder einem Kunststoff gefertigt ist.

5. Tragbares Sprühgerät (1) nach einem der vorangehenden Ansprüche
**dadurch gekennzeichnet, dass**
der Handhebel (4) einen Anschluss-Stutzen (16) für den Schlauch aufweist, wobei der Anschluss-Stutzen (16) als Teil des Handhebels (4) ausgebildet ist.

6. Tragbares Sprühgerät (1) nach einem der vorangehenden Ansprüche
**dadurch gekennzeichnet, dass**
die Kolbenstange (13) hohl ausgebildet und eine Ansaugleitung für die Flüssigkeit aus dem Tank (12) in den Pumpenzylinder (20) bildet.

7. Tragbares Sprühgerät (1) nach einem der vorangehenden Ansprüche
**dadurch gekennzeichnet, dass**
die Pumpe (12) zur statischen Dichtung gegen aussen einen Balg (24) aufweist.

8. Tragbares Sprühgerät (1) nach einem der vorangehenden Ansprüche
**dadurch gekennzeichnet, dass**
die Pumpe (12) eine Öffnung zum Hohlraum (10) des Handhebels (4) aufweist, die mit einem Rückschlagventil (23) versehen ist.

9. Tragbares Sprühgerät (1) nach einem der vorangehenden Ansprüche
**dadurch gekennzeichnet, dass**
am Kolben (21) der Pumpe (12) ein Rückschlagventil (26) als Rückstromsperre angeordnet ist.

10. Tragbares Sprühgerät (1) nach einem der vorangehenden Ansprüche
**dadurch gekennzeichnet, dass**
der Kolben (21) der Pumpe (12)
eine innere Kolbenlippe (21 a) und eine äussere Kolbenlippe (21 b) aufweist und ein frei beweglicher O-Ring (26) zwischen der inneren und äusseren Kolbenlippe (21 a, 21 b) angeordnet ist

11. Tragbares Sprühgerät (1) nach einem der vorangehenden Ansprüche
**dadurch gekennzeichnet, dass**
zwecks Betätigung des Handhebels (4) von einer horizontalen Ausgangsposition (4a) als auch vertikalen Ausgangsposition (4b), der gesamte Handhebel (4) von der Drehachse (6) abnehmbar ist und in einer horizontalen Position als auch in einer vertikalen Position, parallel zum Tank (2) fixierbar ist.

12. Tragbares Sprühgerät (1) nach einem der vorangehenden Ansprüche
**dadurch gekennzeichnet, dass**
die Drehachse (6) mittels eines Schnapphakens an der Ständervorrichtung (7) fixiert ist.

## Claims

1. A portable spray device (1) for discharging liquids, having a tank (12), a pump (12), a hand lever (4), which is movable about an axis of rotation (6), for actuating the pump (12), a pressurized container (10) for accommodating liquid under pressure, wherein liquid is suctioned out of the tank into the pump and conducted under pressure into the pressurized container by the actuation of the hand lever, and a hose having a valve and a nozzle or lance for spraying pressurized liquid, **characterized in that**
the hand lever (4) of the spray device (1) has a cavity (10) having an opening (11), wherein the pump (12) is arranged with a pump cylinder (20), a piston (21), and a piston rod (13) in the cavity (10), and the pump cylinder (20) of the pump (12) and the opening (11) of the hand lever (4) are closed to form a seal,
and the pressurized container is formed by the cavity (10) and the sealed-closed opening (11), and the piston rod (13) is rotatably connected via a lever element (15) to the axis of rotation (6) of the hand lever (4).

2. The portable spray device (1) according to Claim 1,
**characterized in that** the opening (11) of the cavity (10) and the pump cylinder (20) is closed to form a seal to the outside by a removable closing device (14).

3. The portable spray device (1) according to Claim 2,
**characterized in that** the closing device is formed by a closure device (14) with a thread (14a) or by a snap closure.

4. The portable spray device (1) according to any one of the preceding claims, **characterized in that** the hand lever (4) is manufactured from a light construction material or a plastic.

5. The portable spray device (1) according to any one of the preceding claims, **characterized in that** the hand lever (4) has a connecting piece (16) for the hose, wherein the connecting piece (16) is designed as part of the hand lever (4).

6. The portable spray device (1) according to any one of the preceding claims, **characterized in that** the piston rod (13) is hollow and forms an intake line for the liquid from the tank (12) into the pump cylinder (20).

7. The portable spray device (1) according to any one of the preceding claims, **characterized in that** the pump (12) has a bellows (24) for the static seal to the outside.

8. The portable spray device (1) according to any one of the preceding claims, **characterized in that** the pump (12) has an opening to the cavity (10) of the hand lever (4), which is provided with a check valve (23).

9. The portable spray device (1) according to any one of the preceding claims, **characterized in that** a check valve (26) is arranged as a backflow barrier on the piston (21) of the pump (12).

10. The portable spray device (1) according to any one of the preceding claims, **characterized in that** the piston (21) of the pump (12) has an inner piston lip (21a) and an outer piston lip (21 b) and a freely movable O-ring (26) is arranged between the outer and inner piston lips (21 a, 21 b).

11. The portable spray device (1) according to any one of the preceding claims, **characterized in that**, for the purpose of actuating the hand lever (4) from a horizontal starting position (4a) and also from a vertical starting position (4b), the entire hand lever (4) is removable from the axis of rotation (6) and is fixable in a horizontal position and also in a vertical position, parallel to the tank (2).

12. The portable spray device (1) according to any one of the preceding claims, **characterized in that** the axis of rotation (6) is fixed by means of a snap hook on the stand device (7).

## Revendications

1. Pulvérisateur portatif (1) pour l'application de liquides, comprenant un réservoir (12), une pompe (12), un levier manuel (4) pouvant être déplacé autour d'un axe de rotation (6) pour actionner la pompe (12), une cuve sous pression (10) pour recevoir du liquide sous pression, l'actionnement du levier manuel provoquant l'aspiration de liquide du réservoir vers la pompe et son acheminement sous pression vers la cuve sous pression, et avec un tuyau muni d'une soupape et d'une buse ou d'une lance pour la pulvérisation de liquide sous pression, **caractérisé en ce que** le levier manuel (4) du pulvérisateur (1) présente une cavité (10) avec une ouverture (11), la pompe (12) étant disposée dans la cavité (10) avec un cylindre de pompe (20), un piston (21) et une tige de piston (13) et le cylindre de pompe (20) de la pompe (12) et l'ouverture (11) du levier manuel (4) étant fermés de façon étanche, et la cuve sous pression est formée par la cavité (10) et l'ouverture (11) fermée de façon étanche, et la tige de piston (13) est reliée avec possibilité de rotation à l'axe de rotation (6) du levier manuel (4) par un élément de levier (15).

2. Pulvérisateur portatif (1) selon la revendication 1, **caractérisé en ce que** l'ouverture (11) de la cavité (10) et du cylindre de pompe (20) est fermée de façon étanche vis-à-vis de l'extérieur par un dispositif d'obturation (14) amovible.

3. Pulvérisateur portatif (1) selon la revendication 2, **caractérisé en ce que** le dispositif d'obturation est formé par un dispositif d'obturation (14) avec un filetage (14a) ou par un bouchon à emboîtement.

4. Pulvérisateur portatif (1) selon l'une des revendications précédentes, **caractérisé en ce que** le levier manuel (4) est fait d'un matériau de construction léger ou d'une matière plastique.

5. Pulvérisateur portatif (1) selon l'une des revendications précédentes, **caractérisé en ce que** le levier manuel (4) présente un piquage de raccordement (16) pour le tuyau, lequel piquage de raccordement (16) est conformé comme une partie du levier manuel (4).

6. Pulvérisateur portatif (1) selon l'une des revendications précédentes, **caractérisé en ce que** la tige de piston (13) est creuse et forme une conduite d'aspiration pour aspirer le liquide du réservoir (12) vers le cylindre de pompe (20).

7. Pulvérisateur portatif (1) selon l'une des revendications précédentes, **caractérisé en ce que** la pompe (12) présente un soufflet (24) pour assurer l'étanchéité statique vis-à-vis de l'extérieur.

8. Pulvérisateur portatif (1) selon l'une des revendications précédentes, **caractérisé en ce que** la pompe (12) présente une ouverture vers la cavité (10) du levier manuel (4) qui est munie d'une soupape antiretour (23).

9. Pulvérisateur portatif (1) selon l'une des revendications précédentes, **caractérisé en ce qu'**une soupape antiretour (26) empêchant les reflux est disposée sur le piston (21) de la pompe (12).

10. Pulvérisateur portatif (1) selon l'une des revendications précédentes, **caractérisé en ce que** le piston (21) de la pompe (12) présente une lèvre de piston intérieure (21 a) et une lèvre de piston extérieure (21b) et un joint torique (26) librement mobile est disposé entre les lèvres de piston intérieure et extérieure (21 a, 21 b).

11. Pulvérisateur portatif (1) selon l'une des revendications précédentes, **caractérisé en ce qu'**en vue de l'actionnement du levier manuel (4) à partir d'une position de départ horizontale (4a) aussi bien que d'une position de départ verticale (4b), le levier manuel (4) entier peut être retiré de l'axe de rotation (6) et fixé dans une position horizontale aussi bien que dans une position verticale parallèlement au réservoir (2).

12. Pulvérisateur portatif (1) selon l'une des revendications précédentes, **caractérisé en ce que** l'axe de rotation (6) est fixé sur le dispositif de statif (7) par un crochet d'emboîtement.
